Europäisches Patentamt

European Patent Office

Office européen des brevets

(19)

(11) Veröffentlichungsnummer: **0 315 031**
**A1**

(12) **EUROPÄISCHE PATENTANMELDUNG**

(21) Anmeldenummer: 88117775.2

(22) Anmeldetag: 25.10.88

(51) Int. Cl.⁴: **H01S 3/08 , G02B 27/28 ,**
**G02B 5/30**

(30) Priorität: 05.11.87 DE 3737624

(43) Veröffentlichungstag der Anmeldung:
**10.05.89 Patentblatt 89/19**

(84) Benannte Vertragsstaaten:
**DE FR GB**

(71) Anmelder: **Siemens Aktiengesellschaft Berlin**
**und München**
**Wittelsbacherplatz 2**
**D-8000 München 2(DE)**

(72) Erfinder: **Krüger, Hans, Dipl.-Phys.**
**Peralohstrasse 13**
**D-8000 München 83(DE)**
Erfinder: **Welsch, Wolfgang, Dipl.-Ing. Dr.**
**Fuchsweg 25b**
**D-8011 Baldham(DE)**

(54) **Laserröhre für polarisierte Strahlung.**

(57) In einer Laserröhre mit zwei integrierten Laser-spiegeln (1,12) und einer Polarisationseinrichtung wird die Polarisationseinrichtung einfacher und ko-stengünstiger gestaltet, indem als Polarisationsein-richtung zumindest eine polarisierende Schicht auf einem Laserspiegel angeordnet ist. Dadurch kann ein besonderes Polarisationselement entfallen, der Aufbau wird einfach und die Ausbeute an Laserlicht größer.

# FIG 2

EP 0 315 031 A1

## Laserröhre für polarisierte Strahlung.

Die vorliegende Erfindung betrifft eine Laserröhre nach dem Oberbegriff des Patentanspruchs 1. Eine derartige Laserröhre ist aus der DE-OS 28 28 143 bekannt. Dort wird im Laser zum Zwecke der Polarisation des Laserlichtes ein Brewster-Fenster angeordnet, während der vakuumndichte Verschluß des Lasers durch die Laserspiegel erfolgt. Aus der DE-OS 25 06 707 ist es bekannt, die Spiegelkörper mit Spiegelfassungen über Glaslot hermetisch dicht zu verbinden.

Die Aufgabe, die der vorliegenden Erfindung zugrundeliegt, besteht bei Laserröhren nach dem Oberbegriff des Patentanspruchs 1 in einer Vereinfachung des Aufbaus und in einer Steigerung des Wirkungsgrades.

Diese Aufgabe wird durch die kennzeichnenden Merkmale des Patentanspruchs 1 gelöst.

Eine Polarisationsschicht auf dem Laserspiegel spart eine gesonderte Polarisationseinrichtung ein und verbessert gleichzeitig den Wirkungsgrad, da eine teilreflektierende Oberfläche im Strahlengang eingespart wird. Als polarisierende Schichten können optisch einachsige Schichten wie z.B. in definierter Richtung ionengeätzte Schichten oder gerichtete Polymerschichten eingesetzt werden. Besonders vorteilhaft ist die polarisierende Schicht ausgebildet, indem zumindest eine der Spiegelschichten schräg zur Flächennormalen aufgedampft ist. Dabei ist die schräg aufgedampfte Schicht vorteilhaft unter einem Winkel von zumindest etwa 80° aufgedampft. Durch diese Ausführungsform wird eine zusätzliche Schicht völlig vermieden, die Spiegelschicht selbst erfüllt ztusätzlich die Aufgabe der Polarisation. Damit wird ein Minimum an Verlustleistung erreicht. Die schräg aufgedampfte Schicht läßt sich gut reproduzierbar und mit hoher Genauigkeit herstellen. Die Erfindung ist insbesondere für Gas laseroszillatoren mit einer nur wenig über 1 liegenden Verstärkung je Durchgang des Laserlichtes vorteilhaft einsetzbar, z.B. für HeNe-Laserröhren.

Für den Zusammenbau und den Einsatz des Lasers ist es vorteilhaft, wenn der mit der polarisierenden Schicht versehene Spiegel eine viereckige Spiegeloberfläche besitzt und wenn durch die Spiegelform die Polarisationsrichtung gekennzeichnet ist. Dabei eignet sich insbesondere eine Rechteckform für die Spiegel. Diese ist leicht realisierbar, indem die Laserspiegel von einem größeren Mutterspiegel abgetrennt werden. Die Polarisationsrichtung wird dabei zweckmäßigerweise parallel zur kleineren oder größeren Kante des Spiegels ausgerichtet. Die Spiegel werden vorteilhaft auf die Stirnseite einer Spiegelhalterung aufgelötet. Sie können dabei über die Halterung überstehen, die Form des Spiegels ist keinen besonderen Toleranzforderungen unterworfen. Bei der üblichen Verwendung eines vollreflektierenden und eines teildurchlässigen Spiegels trägt vorteilhaft der vollreflektierende Spiegel eine polarisierende Schicht und ist mit seiner Rückseite auf eine Metallplatte aufgelötet. Die Metallplatte ist dann vorteilhaft mit den übrigen Teilen des Lasergehäuses vakuumdicht verbunden und fixiert den Spiegel auf der Innenseite des Gehäuses. In diesem Fall ist der Spiegel kleiner als die Öffnung der Spiegelhalterung und in letztere eingeschoben, während die Metallplatte auf die Halterung aufgelötet ist. So ist der Spiegel besonders klein und materialsparend ausgebildet.

Eine andere günstige Ausführungsform besteht darin, daß der Spiegel einen mit lötfähigem Metall beschichteten Lötbereich aufweist, welcher einen Strahldurchtrittsbereich freiläßt und daß der Lötbereich auf die Stirnseite einer Spiegelhalterung aufgelötet ist. Dabei besteht die Spiegelhalterung vorteilhafterweise im wesentlichen aus einem gezogenen Kupferrohr. Die Duktilität des Kupfers reicht zur Kompensation von Spannungen aus, die bei Temperaturschwankungen entstehen, auch wenn sein Temperaturausdehnungskoeffizient auf den des Spiegelglases nicht angepaßt ist.

Die Erfindung wird nun anhand von vier Figuren näher erläutert. Sie ist nicht auf die in den Figuren dargestellten Beispiele beschränkt.

Fig. 1 zeigt eine Ausführungsform der Erfindung in teilweise geschnittener und gebrochener Ansicht,

Fig. 2 ein weiteres Ausführungsbeispiel in geschnittener Ansicht,

Fig. 3 eine Draufsicht auf einen Mutterspiegel mit Kennzeichnung der Aufteilung in einzelne Laserspiegel,

Fig. 4 zeigt einen in Laserspiegel unterteilten Mutterspiegel in Draufsicht.

Ein Planspiegel 1 ist mit einer polarisierenden Schicht 11 versehen und über ein Glaslot 4 mit einem Metallflansch 3 vakuumdicht verbunden, wobei der Metallflansch 3 auf ein Metallrohr 2 aufgelötet und dieses Metallrohr 2 mit einer metallischen Stirnplatte 5 des Gehäuses vakuumdicht verbunden ist. Hierbei braucht nur die Stirnplatte 5 aus einem Material zu bestehen, dessen Temperaturkoeffizient an den des aus Glas oder Keramik bestehenden Gehäuses 16 angepaßt ist. Die übrigen Metallteile 2, 3 können aus einem beliebigen Stahl oder aus Kupfer bestehen. Auftretende thermische Spannungen werden durch das Glaslot 4 aufgenommen.

Auf der gegenüberliegenden Seite schließen an eine Stirnplatte 5 ein Metallrohr 2 und eine Trägerplatte 6 an, wobei die Trägerplatte 6 einen konkaven Spiegel 7 trägt. Der konkave Spiegel 7 ist über Glaslot 4 mit der Trägerplatte 6 vakuumdicht verbunden. Der konkave Spiegel 7 kann ebenfalls eine - hier nicht dargestellte - polarisierende Schicht tragen.

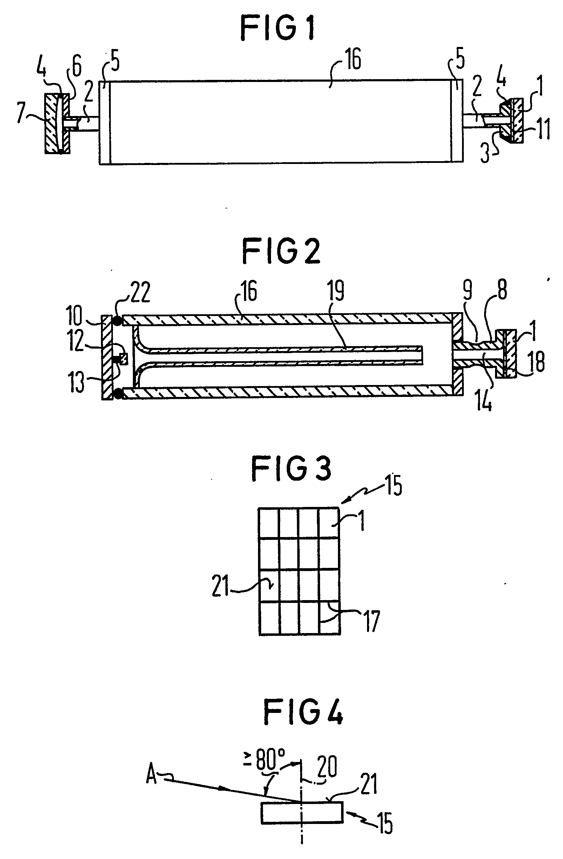

In Fig. 2 ist einer der beiden Spiegel 1 oder 12 mit einer polarisierenden Schicht versehen. Der Spiegel 1 ist auf die Stirnseite eines flanschartig nach außen aufgeweiteten, gezogenen Metallrohres 8 aufgelötet. Hierzu ist der Spiegel 1 im Randbereich 18 mit einem lötfähigen Metall beschichtet und durch Weichlot mit dem Metallrohr 8 vakuumdicht verbunden. Eine Verjüngung 9 des Querschnittes im gezogenen Metallrohr 8 ermöglicht eine örtlich begrenzte Verbiegung des Metallrohrs 8 und damit eine Justierung der Neigung des Spiegels 1 auf maximale Laserleistung. Der Spiegel 1 ist teildurchlässig verspiegelt. Die auf dem Randbereich 18 des Spiegels angeordnete lötfähige Metallschicht besitzt eine Ausnehmung im Bereich des Rohrinnendurchmessers 14, so daß der Laserstrahl in den Spiegel eintreten kann. Der vollreflektierende Spiegel 12 ist mittels einer Lotschicht 13, vorzugsweise aus Glaslot, auf einer Endplatte 10 mechanisch fixiert. Die Endplatte 10 ist mittels eines Ringes 22 aus Glaslot mit dem Gehäuse 16 vakuumdicht verbunden. Der Spiegel 12 besitzt eine spiegelnde Oberfläche, die kleiner ist als der Querschnitt der Kapillare 19 und somit den Strahldurchmesser und die Strahlform definiert. Der Spiegel 12 kann als Hohlspiegel ausgebildet sein.

Fig. 3 zeigt einen Mutterspiegel 15, welcher entlang den Trennlinien 16 und 17 in Laserspiegel 1 zertrennt wurde.

Fig. 4 zeigt einen Mutterspiegel 15. Dieser wird aus der Pfeilrichtung A schräg bedampft. Die so entstehende Schicht stellt eine erfindungsgemäße polarisierende Schicht dar. Es können auch mehrere Spiegelschichten eines Interferenzspiegels aus der-selben Bedampfungsrichtung A aufgedampft wer-den. Dadurch wird der Polarisationseffekt verstärkt. Die Bedampfungsrichtung A schließt vorteilhaft mit dem Lot 20 auf die Oberfläche 21 des Mutterspie-gels 15 einen Winkel von zumindest etwa 80° ein.

Als polarisierende Schichten lassen sich sowohl metallische als auch dielektrische Schichten einsetzen. Bei metallischen Schichten ist die Schichtdicke vorteilhaft kleiner als 10nm. Diese Schichtdicke reicht aus, um für den E-Vektor z.B. eines HeNe- Lasers eine ausreichende Bedämp-fung einer ersten Schwingungskomponente darzu-stellen, so daß nur eine zweite, auf die erste senkrechte Schwingungskomponente verstärkt wird. Vorteilhafte Schichtwerkstoffe sind Silber, Gold, Aluminium.

Für dielektrische Schichten eignen sich insbe-sondere die Werkstoffe $SiO_2$, $Al_2O_3$, $TiO_2$, $Ta_2O_3$. Deren Schichtdicke beträgt vorteilhaft etwa λ/2 der gewünschten Laserwellenlänge. Dabei bilden sich zueinander annähernd parallele, wellenförmige Streifen aus, deren Abstände und deren Lage Interferenzen hervorrufen, die zu Schwächung bzw. zum Auslöschen einer Schwingungsrichtung des E-Vektors führen.

Außerdem ist es möglich, durch schräges Aufdampfen von dichroitischen Schichten eine Polarisation zu erreichen. Die schrägaufgedampften dichroitischen Schichten, die z.B. aus Turmalin beste-hen können, absorbieren eine Schwingungsrich-tung des E-Vektors und bewirken dadurch eine Polarisation.

Anstelle des Schrägbedampfens kann auch ein Ionenätzen der Spiegeloberflächen eingesetzt werden, wobei ein Ionenstrahl in Pfeilrichtung A auf den Mutterspiegel 15 gerichtet wird. Dabei werden zueinander parallele, wellenförmige Oberflächendeformationen erzeugt, die eine ähnliche Wirkung zeigen, wie die durch Schrägbedampfen erreichten Streifen. Dabei können die Spiegeloberflächen selbst geätzt werden, wobei vorzugsweise eine Ätztiefe von etwa λ/2 der gewünschten Laserstrahlung erzeugt wird. Die Spiegeloberflächen können aber auch mit einer ca. 2nm bis 19nm dicken leitfähigen Schicht versehen sein, wobei es genügt, durch diese leitfähige Schicht hindurch zu ätzen.

Insbesondere für IR-Laserstrahlung eignet sich außerdem eine photolithographische Strukturierung von Metallschichten, die auf den Spiegel aufge-bracht sind.

## Ansprüche

1. Laserröhre für polarisierte Strahlung, welche zwei integrierte Laserpiegel und zumindest eine Polarisationseinrichtung enthält, **dadurch gekenn-zeichnet**, daß als Polarisationseinrichtung zumin-dest eine polarisierende Schicht auf einem Laserspiegel angeordnet ist.

2. Laserröhre nach Anspruch 1, **dadurch ge-kennzeichnet**, daß als Polarisationseinrichtung zu-mindest auf eine Spiegelschicht schräg zur Flächennormalen eine dielektrische oder eine Metallschicht aufgedampft ist.

3. Laserröhre nach Anspruch 2, **dadurch gekennzeichnet**, daß die schräg aufgedampfte Schicht unter einem Winkel von zumindest etwa 80° aufgedampft ist.

4. Laserröhre nach Anspruch 1, **dadurch gekennzeichnet**, daß der mit der polarisierenden Schicht versehene Spiegel eine viereckförmige Spiegeloberfläche besitzt und daß durch die Form der Spiegeloberfläche die Polarisationsrichtung gekennzeichnet ist.

5. Laserröhre nach Anspruch 4, **dadurch gekennzeichnet**, daß der Spiegel rechteckförmig ist.

6. Laserröhre nach Anspruch 1, **dadurch gekennzeichnet**, daß der Spiegel auf der Stirnseite einer Spiegelhalterung angelötet bzw. aufgeklebt ist.

7. Laserröhre nach Anspruch 1, **dadurch gekennzeichnet**, daß der vollreflektierende Spiegel des Laserresonators eine polarisierende Schicht trägt und mit seiner Rückseite auf eine Metallplatte aufgelötet ist.

8. Laserröhre nach Anspruch 7, **dadurch gekennzeichnet**, daß der Spiegel kleiner als die Öffnung in der Spiegelhalterung und in letztere eingeschoben ist und daß die Metallplatte auf die Halterung aufgelötet ist.

9. Laserröhre nach Anspruch 1, **dadurch gekennzeichnet**, daß der Spiegel einen mit lötfähigem Metall beschichteten Lötbereich aufweist, welcher einen Strahldurchtrittsbereich freiläßt und daß der Lötbereich auf die Stirnseite einer Spiegelhalterung aufgelötet ist.

10. Laserröhre nach Anspruch 9, **dadurch gekennzeichnet**, daß die Spiegelhalterung im wesentlichen aus einem gezogenen Kupferrohr besteht.

11. Laserröhre nach Anspruch 2, **dadurch gekennzeichnet**, daß die schrägaufgedampfte Schicht eine Metallschicht mit einer Schichtdicke von höchstens etwa 10nm ist.

12. Laserröhre nach Anspruch 2, **dadurch gekennzeichnet**, daß die schrägaufgedampfte Schicht eine dielektrische Schicht von etwa $\lambda/2$ ist.

13. Laserröhre nach Anspruch 2, **dadurch gekennzeichnet**, daß die schrägaufgedampfte Schicht eine dichroitische Schicht mit einer Dicke von etwa 2nm bis 10nm ist.

14. Laserröhre nach Anspruch 1, **dadurch gekennzeichnet**, daß in der Spiegeloberfläche mittels Ionenätzen unter einem Winkel von zumindest etwa 80° zur Flächennormalen ein Rillenmuster erzeugt ist, welches eine Schwingungsrichtung des E-Vektors mittels Interferenz auslöscht.

15. Laserröhre nach Anspruch 1, **dadurch gekennzeichnet**, daß eine Spiegeloberfläche mit Metall in einer Dicke von 2nm bis 10nm beschichtet und daß diese Metallschicht durch Ionenätzen unter einem Winkel von zumindest etwa 80° in ein Streifenmuster aufgelöst ist.

16. Laserröhre nach Anspruch 1, **dadurch gekennzeichnet**, daß auf dem Laserspiegel eine photolithogra phisch strukturierte Metallschicht angeordnet ist, deren Linienabstände in der Größenordnung der gewünschten Laserwellenlänge liegen.

# FIG 1

# FIG 2

# FIG 3

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,Y | GB-A-2 015 812 (N.V. PHILIPS)<br>* Zusammenfassung; Anspruch 1; Seite 1, Zeilen 118-125; Figuren 1,2 *<br>--- | 1,2,12 | H 01 S 3/08<br>G 02 B 27/28<br>G 02 B 5/30 |
| Y | GB-A-2 177 814 (COHERENT INC.)<br>* Ansprüche 1-4; Zusammenfassung *<br>--- | 1,2 | |
| A | US-A-4 009 933 (FIRESTER)<br>* Zusammenfassung; Spalte 1, Zeilen 58-60; Spalte 2, Zeilen 4-14 *<br>--- | 1,2,16 | |
| A | PATENT ABSTRACTS OF JAPAN, Band 10, Nr. 61 (E-387)[2118], 11. März 1986; &<br>JP-A-60 211 989 (MITSUBISHI DENKI K.K.) 24-10-1985<br>* Zusammenfassung *<br>--- | 4 | |
| A | US-A-4 250 467 (S. KUBOTA et al.)<br>* Figuren; Spalte 1, Zeile 63 - Spalte 2, Zeile 28 *<br>----- | 6,8-10 | **RECHERCHIERTE SACHGEBIETE (Int. Cl.4)**<br><br>H 01 S<br>G 02 B |

Der vorliegende Recherchenbericht wurde für alle Patentansprüche erstellt

| Recherchenort | Abschlußdatum der Recherche | Prüfer |
|---|---|---|
| DEN HAAG | 04-01-1989 | FARNESE G.P. |